# EUROPÄISCHE PATENTSCHRIFT

(11) **EP 3 386 677 B1**
(45) Veröffentlichungstag und Bekanntmachung des Hinweises auf die Patenterteilung: **11.03.2020**
(21) Anmeldenummer: 17811937.6
(22) Anmeldetag: 07.12.2017
(51) Int. Cl.: B23K 37/02, B23K 26/08, B23K 26/36, B23K 37/047

(54) **VORRICHTUNG UND VERFAHREN ZUR BEARBEITUNG EINES WERKSTÜCKES MITTELS LASERSTRAHLUNG**
DEVICE AND METHOD FOR MACHINING A WORKPIECE BY MEANS OF LASER RADIATION
DISPOSITIF ET PROCÉDÉ D'USINAGE D'UNE PIÈCE PAR RAYONNEMENT LASER

(30) Priorität: 19.12.2016 DE 102016124742
(43) Veröffentlichungstag der Anmeldung: 17.10.2018
(73) Patentinhaber: GFH GmbH, 94469 Deggendorf (DE)
(72) Erfinder: SÜSS, Ludwig, 94209 Regen (DE)
(74) Vertreter: Wolf, Gerhard
(86) Internationale Anmeldenummer: PCT/EP2017/081848
(87) Internationale Veröffentlichungsnummer: WO 2018/114357

(56) Entgegenhaltungen:
- EP-A1- 3 042 733
- CN-U- 205 324 997
- GF Machining Solutions: "Microlution - MLDS", , 25 August 2016 (2016-08-25), page 1, XP054979110, Retrieved from the Internet: URL:https://www.youtube.com/watch?v=x5JlpX LRQlY [retrieved on 2019-02-06]

## Beschreibung

Die Erfindung betrifft eine Vorrichtung und ein Verfahren zur Bearbeitung, beispielsweise zum Bohren, Schneiden oder Abtragen von Material eines Werkstückes mittels Laserstrahlung.

Laserbearbeitungsmaschinen, beispielsweise Laserschneidmaschinen sind grundsätzlich bekannt. Sie weisen ein Laserbearbeitungswerkzeug auf, an dem eine hochenergetische Laserstrahlung bereitgestellt wird. Wird diese hochenergetische Laserstrahlung auf ein zu bearbeitendes Werkstück aufgebracht, erfolgt ein Materialabtrag.

Es sind Laserbearbeitungsmaschinen bekannt, die zudem eine Messstation aufweisen, um basierend auf den an der Messstation aufgenommenen Messwerten die Bearbeitung des Werkstücks zu vollziehen. Insbesondere kann durch einen an der Messstation vorgesehenen Sensor die Lage des Werkstücks im Raum vermessen werden, die die Grundlage für die nachfolgende Bearbeitung des Werkstücks bietet.

Das YouTube-Video https://www.youtube.com/watch?v=x5JlpXLRQIY wurde als nächstliegender Stand der Technik angesehen. Es offenbart eine Laserbearbeitungsmaschine, bei der in einer vertikal verlaufenden Maschinenebene (x-z-Ebene gemäß dem Koordinatensystem der vorliegenden Erfindung) nebeneinander und beabstandet zueinander drei Maschinenstationen vorgesehen sind. Die mittlere Station ist dabei eine Laserbearbeitungsstation, die rechte Station eine Station zur Vermessung der Werkstücke. Zum Bewegen der Werkstücke zwischen der linken und der mittleren Station ist eine erste Transporteinheit und zum Bewegen des Werkstücks zwischen der mittleren Station und der rechten Station eine zweite Transporteinheit vorgesehen. Die erste und zweite Transporteinheit sind in x- Richtung sowie in z Richtung bewegbar (Achsendefinition gemäß dem Koordinatensystem der vorliegenden Erfindung).

Die Druckschrift CN 205324997 U betrifft eine automatisierte Schweißvorrichtung mit mehreren Schweißstationen.

Die Druckschrift EP 3 042 733 A1 offenbar eine Vorrichtung und ein Verfahren zur Bearbeitung von Verbundwerkstoffen.

Nachteilig an den bisher bekannt gewordenen Laserbearbeitungsmaschinen ist, dass die Laserbearbeitung mittels des Laserbearbeitungswerkzeugs nur über einen relativ kurzen Zeitraum erfolgt und die Zeitspanne, in der die Zuführung eines Werkstücks und die Vermessung desselben erfolgt, nicht zur Werkstückbearbeitung verwendet werden kann.

Ausgehend hiervon ist es Aufgabe der Erfindung, eine Laserbearbeitungsmaschine anzugeben, bei der das die Werkstückbearbeitung bewirkende Laserbearbeitungswerkzeug in Bezug auf dessen Einsatzzeit effektiver genutzt wird.

Die Aufgabe wird durch die Merkmale der unabhängigen Patentansprüche 1 und 17 gelöst. Bevorzugte Ausführungsformen sind Gegenstand der Unteransprüche.

Gemäß einem ersten Aspekt bezieht sich die Erfindung auf eine Laserbearbeitungsmaschine zum Abtragen von Material von einem Werkstück. Die Laserbearbeitungsmaschine umfasst zumindest eine erste Station, an der ein Laserbearbeitungswerkzeug vorgesehen ist und an der eine Bearbeitung des Werkstücks mittels des Laserbearbeitungswerkzeugs erfolgt. Ferner ist zumindest eine zweite Station vorgesehen, an der eine Vermessung und/oder Bearbeitung des Werkstücks erfolgt. Insbesondere kann die zweite Station einen Sensor umfassen, mittels dem Informationen, beispielsweise Geometrie, Kontur, Höhenprofil, zumindest eine Markierung o.ä. erfassbar ist. Der Sensor kann beispielsweise ein bildaufnehmender Sensor, beispielsweise eine Kamera sein. Alternativ oder zusätzlich kann die zweite Station auch ein zur Werkstückbearbeitung ausgebildetes Werkzeug aufweisen. Dies kann wiederum ein Laserbearbeitungswerkzeug, ein Werkzeug zur spanenden Werkstückbearbeitung oder ein Werkzeug zur erosiven Werkstückbearbeitung sein (z.B. Funkenerodieren). Des Weiteren ist eine Transporteinrichtung zum Bewegen des Werkstücks zwischen der ersten Station und der zweiten Station vorgesehen. Die Transporteinrichtung weist zumindest zwei Transporteinheiten auf, die unabhängig voneinander in zwei unterschiedlichen Raumrichtungen verfahrbar sind, und zwar derart, dass die Transporteinheiten in einer ersten Raumrichtung, entlang der die erste und zweite Station angeordnet sind, aneinander vorbeibewegbar sind. Vorzugsweise ist die Transporteinrichtung derart ausgebildet, dass die Transporteinheiten vor dem aneinander Vorbeibewegen in einer zweiten Raumrichtung zueinander beabstandet werden, so dass die Transporteinheiten dann durch Verfahren in der ersten Raumrichtung kollisionsfrei aneinander vorbeibewegt werden können. Dies schließt auch den Fall ein, dass die Transporteinheiten gleichzeitig in der ersten und zweiten Raumrichtung bewegt werden.

Dadurch wird erreicht, dass die Transporteinheiten wechselweise ein Werkstück der ersten, das Laserbearbeitungswerkzeug aufweisenden Station zuführen können und dabei die weitere Transporteinheit, die sich gerade nicht an der ersten Station befindet, beispielsweise die Abführung des bereits bearbeiteten Werkstücks und/oder die Zuführung eines neuen Werkstücks und dessen Vermessung/Bearbeitung an der zweiten Station bewirken kann. Dadurch wird der Durchsatz der Laserbearbeitungsmaschine und damit deren Effizienz wesentlich gesteigert.

In einem bevorzugten Ausführungsbeispiel weist die Transporteinrichtung eine Führungsschienenanordnung auf, die in einer zweiten Raumrichtung quer zur ersten Raumrichtung verläuft. Auf dieser Führungsschienenanordnung sind zumindest zwei voneinander unabhängig bewegbare Verfahrschienen vorgesehen. Durch diese Verfahrschienen werden Verfahrwege für die jeweils darauf beweglichen Transporteinheiten gebildet. Die Verfahrschienen können unabhängig voneinander entlang der zweiten Raumrichtung verfahren werden, um ein kollisionsfreies Vorbeibewegen der Transporteinheiten zu ermöglichen.

In einem bevorzugten Ausführungsbeispiel ist auf jeder Verfahrschiene eine, insbesondere genau eine Transporteinheit geführt, die in der ersten, quer, insbesondere senkrecht zur zweiten Raumrichtung verlaufenden Raumrichtung verfahrbar ist. Die Verfahrschiene bildet damit eine Führung für die Transporteinheit, so dass diese entlang dieser Verfahrschiene bewegbar ist. Die Verfahrschiene bildet dabei insbesondere eine Gleitführung für die Transporteinheit.

In einem bevorzugten Ausführungsbeispiel erfolgen die Bewegung der Verfahrschienen auf der Führungsschienenanordnung und/oder die Bewegung der Transporteinheit auf der jeweiligen Verfahrschiene mittels eines Linear-Direktantriebs. Linear-Direktantriebe zeichnen sich durch eine hohe Positioniergenauigkeit aus. Vorzugsweise weisen die Linear-Direktantriebe eine Positioniergenauigkeit derart auf, dass das Werkstück durch das Verfahren der Verfahrschienen entlang der Führungsschienenanordnung und das Verfahren der Transporteinheiten auf diesen Verfahrschienen mit einer Genauigkeit von kleiner 5µm, insbesondere kleiner 1µm gegenüber dem Laserbearbeitungswerkzeug positionierbar sind.
In einem bevorzugten Ausführungsbeispiel sind die erste Station und die zweite Station in einer gemeinsamen, vertikal ausgerichteten Maschinenebene angeordnet. Die Laserbearbeitungsmaschine ist dabei derart ausgebildet, dass zumindest eine Verfahrschiene zum aneinander Vorbeibewegen der Transporteinheiten entlang der zweiten Raumrichtung bewegt wird. Dadurch werden die Transporteinheiten, die vor dem Auseinanderbewegen zumindest abschnittsweise entlang der ersten Raumrichtung überlappende Abschnitte aufweisen (d.h. Abschnitte der Transporteinheiten liegen in einer gemeinsamen vertikalen Maschinenebene), derart auseinanderbewegt, dass diese kollisionsfrei aneinander vorbeibewegt werden können (d.h. die Überlappung wird durch das Auseinanderbewegen aufgelöst).

In einem bevorzugten Ausführungsbeispiel werden eine Verfahrschiene oder zumindest zwei Verfahrschienen entlang der zweiten Raumrichtung bewegt, und zwar derart, dass bei einem Auseinanderfahren der Verfahrschienen der Abstand vergrößert wird, um die Transporteinheiten aneinander vorbeibewegen zu können.

In einem bevorzugten Ausführungsbeispiel wird die zumindest eine Verfahrschiene nach dem aneinander Vorbeibewegen der Transporteinheiten entlang der zweiten Raumrichtung zurückbewegt. Dadurch werden der Abstand zwischen den Verfahrschienen wieder reduziert und dabei die Transporteinheiten, insbesondere deren Werkstückaufnahmen wieder in der gemeinsamen, vertikal ausgerichteten Maschinenebene positioniert.

In einem bevorzugten Ausführungsbeispiel sind die Führungsschienenanordnung und/oder die Verfahrschienen temperaturstabilisiert ausgebildet. Die Temperaturstabilisierung kann insbesondere durch ein umlaufend transportiertes Fluid bewirkt werden. Auch andere Varianten der Temperaturstabilisierung (z.B. elektrisch) sind denkbar. Dadurch werden durch thermische Ausdehnung entstehende Positionierungsungenauigkeiten verhindert oder zumindest wesentlich reduziert, was eine höhere Bearbeitungsgenauigkeit zur Folge hat.

In einem bevorzugten Ausführungsbeispiel sind die Antriebe für die Verstellung der Verfahrschienen und/oder die Antriebe für die Verstellung der Transporteinheiten und/oder die Lagerstellen dieser Antriebe temperaturstabilisiert ausgebildet. Die Temperaturstabilisierung kann wiederum beispielsweise durch ein umlaufend transportiertes Fluid bewirkt werden. Damit kann die Bearbeitungsgenauigkeit weiter verbessert werden.

In einem bevorzugten Ausführungsbeispiel weist die Transporteinheit jeweils eine Werkstückaufnahme auf, die um zumindest zwei zueinander orthogonale Raumachsen rotierbar und/oder schwenkbar ist. Die Werkstückaufnahme kann insbesondere zum Halten des Werkstücks durch Einspannen ausgebildet sein. Durch das Rotieren bzw. Schwenken wird eine verbesserte Variabilität bei der Bearbeitung erreicht. Beispielsweise können dadurch schräg verlaufende Bohrungen etc. in das Werkstück eingebracht werden.

In einem bevorzugten Ausführungsbeispiel weisen die Transporteinheiten jeweils eine Werkstückaufnahme auf und die auf unterschiedlichen Verfahrschienen vorgesehenen Transporteinheiten sind derart angeordnet, dass die Werkstückaufnahmen zu unterschiedlichen Seiten, d.h. einander zugewandt, von der jeweiligen Verfahrschiene abstehen. Damit wird erreicht, dass die Werkstückaufnahmen durch entsprechendes Positionieren der Verfahrschienen in der Maschinenebene angeordnet werden, in der die an den Stationen durchgeführten Prozesse erfolgen sollen.

In einem bevorzugten Ausführungsbeispiel ist eine dritte Station vorgesehen, die als Werkstückzuführungsstation ausgebildet ist. An dieser Position kann eine maschinelle oder manuelle Zuführung der zu bearbeitenden Werkstücke erfolgen. Dies kann auch beispielsweise mittels eines Roboters erfolgen. Ebenso kann an der dritten Station ein Wenden der Werkstücke erfolgen, um nach einer vorderseitigen Bearbeitung eine rückseitige Bearbeitung des Werkstücks vollziehen zu können.

In einem bevorzugten Ausführungsbeispiel ist die zweite Station (z.B. Messstation) zwischen der ersten Station und der dritten Station vorgesehen. Ferner kann die dritte Station als eine äußere Station vorgesehen sein. Dadurch kann ein an der dritten Station zugeführtes Werkstück an die zweite Station verfahren werden, während ein weiteres, an der Bearbeitungsstation befindliches Werkstück durch das Laserbearbeitungswerkzeug bearbeitet wird, d.h. ohne die Bearbeitung unterbrechen zu müssen.

In einem bevorzugten Ausführungsbeispiel sind die erste Station und die zweite Station derart angeordnet, dass eine Bearbeitung des Werkstücks an der ersten Station nach einem Verfahren desselben in der ersten Raumrichtung von der zweiten Station an die erste Station ohne Verfahren in einer quer zur ersten Raumrichtung verlaufenden zweiten Raumrichtung erfolgt. Dadurch wird die Bearbeitungsgenauigkeit weiterhin verbessert, da keine Positionierungenauigkeiten bei der Positionierung in der zweiten Raumrichtung entstehen.

In einem bevorzugten Ausführungsbeispiel wird beim aneinander Vorbeibewegen eine erste Transporteinheit von der ersten Station zur dritten Station und eine zweite Transporteinheit in entgegengesetzter Richtung von der zweiten Station zur ersten Station verfahren. In anderen Worten erfolgt das aneinander Vorbeibewegen der Transporteinheiten im Bereich zwischen der ersten und zweiten Station. Damit kann das Laserbearbeitungswerkzeug möglichst lange im Eingriff sein und parallel eine Zuführung eines Werkstücks zu der weiteren Transporteinheit bzw. dessen Vermessung/Vorbearbeitung etc. erfolgen.

In einem bevorzugten Ausführungsbeispiel ist die zweite Station eine Messstation mit einem Sensor zur Aufnahme von Werkstückinformationen und an der ersten Station erfolgt die Bearbeitung des Werkstücks basierend auf den an der Messstation aufgenommenen Werkstückinformationen. Damit kann nach der Vermessung des Werkstücks beispielsweise ein lagegenauer Materialabtrag, beispielsweise ein eine Bohrung herstellender Materialabtrag erfolgen.

In einem bevorzugten Ausführungsbeispiel ist eine Optikeinheit vorgesehen, mittels der eine von einer Laserquelle bereitgestellte Laserstrahlung in eine Taumelbewegung versetzt wird. Dadurch können positiv oder negativ konische Öffnungen bzw. Ausnehmungen (z.B. auch mit Hinterschneidungen) in dem Werkstück erzeugt werden.

In einem bevorzugten Ausführungsbeispiel ist im Bereich der Bearbeitungsstation eine Vorrichtung zum Ausbringen eines Prozessgases vorgesehen ist, mittels der von der Laserstrahlung verdampftes Material ausgetrieben wird. Durch die Bereitstellung des Prozessgases kann die Bearbeitungsqualität weiter erhöht werden.

Gemäß einem weiteren Aspekt betrifft die Erfindung ein Verfahren zum Betreiben einer Laserbearbeitungsmaschine umfassend zumindest eine erste Station mit einem Laserbearbeitungswerkzeug, eine zweite Station und eine Transporteinrichtung mit zumindest zwei Transporteinheiten zum Bewegen von Werkstücken zwischen der ersten und zweiten Station, wobei das Verfahren folgende Schritte aufweist:
- Durchführen eines Bearbeitungsschritts an einem an einer ersten Transporteinheit gehaltenen Werkstück an der ersten Station;
- Durchführen eines Mess- und/oder Bearbeitungsschritts an einem an einer zweiten Transporteinheit gehaltenen Werkstück an der zweiten Station;
- Vorbeibewegen der zweiten Transporteinheit an der ersten Transporteinheit derart, dass die Transporteinheiten in einer zweiten Raumrichtung quer zu einer Maschinenebene, in der die erste und zweite Station angeordnet sind, auseinanderbewegt und parallel zu dieser Maschinenebene verfahren werden, um die erste Transporteinheit an der zweiten Station und/oder die zweite Transporteinheit an der ersten Station zu positionieren.

Unter den Begriff "Laserbearbeitungswerkzeug" im Sinne der Erfindung wird insbesondere ein Werkzeug verstanden, das hochenergetische Laserstrahlung bereitstellt, mittels der ein Materialabtrag an einem zu bearbeitenden Werkstück bewirkt wird. Das "Laserbearbeitungswerkzeug" kann dabei eine Optik aufweisen, mittels der die Laserstrahlung gebündelt bzw. fokussiert wird.

Unter den Begriff "Laserbearbeitungsmaschine" im Sinne der Erfindung wird insbesondere eine Maschine verstanden, mittels der durch eine Laserstrahlung ein Materialabtrag erfolgt, beispielsweise Laserbohren, Laserschneiden, Laserdrehen oder ein flächiger Materialabtrag, der lediglich Material abträgt ohne eine Öffnung durch das Werkstück hindurch zu erzeugen.

Die Ausdrücke "näherungsweise", "im Wesentlichen" oder "etwa" bedeuten im Sinne der Erfindung Abweichungen vom jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an Ausführungsbeispielen näher erläutert. Es zeigen:
- Fig. 1: beispielhaft eine Ausführungsform einer Laserbearbeitungsmaschine in einer perspektivischen Ansicht;
- Fig. 2: beispielhaft die Laserbearbeitungsmaschine gemäß Fig. 1 in einer seitlichen Ansicht;
- Fig. 3: beispielhaft die Laserbearbeitungsmaschine gemäß Fig. 1 und 2 in einer oberseitigen Ansicht; und
- Fig. 4a - 4e: beispielhaft die schematische Darstellung von Bewegungsabläufen einer Transporteinrichtung der Laserbearbeitungsmaschine gemäß Fig. 1 bis 3.

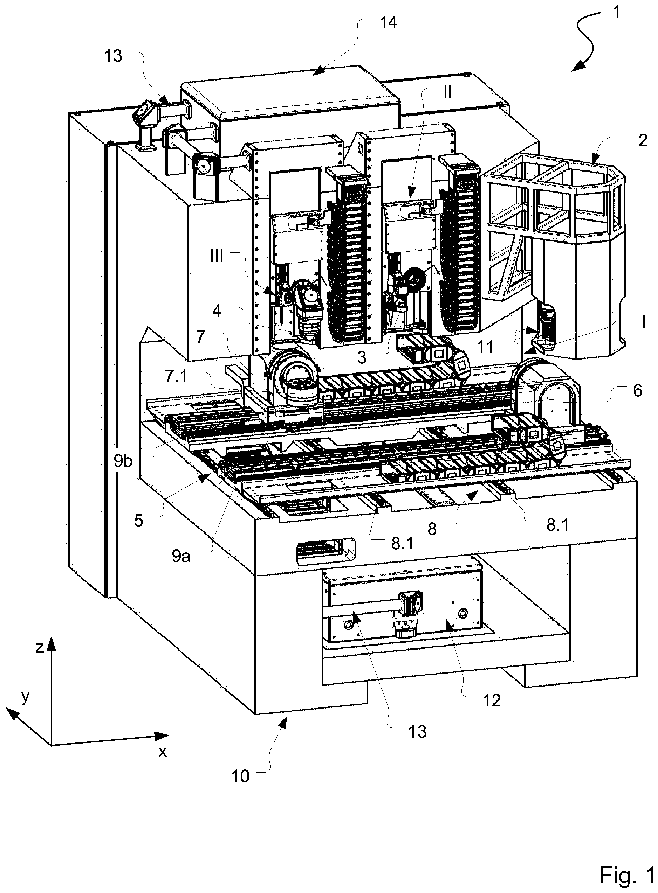

In den Figuren 1 bis 3 ist jeweils eine Laserbearbeitungsmaschine 1 in unterschiedlichen Ansichten gezeigt. Die nachfolgende Beschreibung der Laserbearbeitungsmaschine 1 erfolgt unter Bezugnahme auf ein kartesisches Koordinatensystem mit senkrecht zueinander stehenden Achsen, nämlich einer x-Achse, eine y-Achse und einer z-Achse. Die Laserbearbeitungsmaschine 1 umfasst im gezeigten Ausführungsbeispiel eine erste Station als Bearbeitungsstation III, eine zweite Station als Messstation II und eine dritte Station als Werkstückzuführungsstation I. Es versteht sich, dass diese Maschinenkonfiguration rein exemplarisch ist und auch andere Konfigurationen von der vorliegenden Erfindung umfass sind, beispielsweise eine Maschine mit lediglich zwei Stationen oder eine Maschine, bei der die zweite Station als weitere Bearbeitungsstation vorgesehen ist. Es versteht sich zudem, dass an einer Bearbeitungsstation neben dem Bearbeitungswerkzeug ein Sensor vorgesehen sein kann, um eine gewünschte Positionierung bzw. Nachpositionierung des Werkstücks vornehmen zu können.

Die Werkstückzuführungsstation I ist dazu ausgebildet, zu bearbeitende Werkstücke in geeigneter Weise zuzuführen. Hierzu ist an dieser Werkstückzuführungsstation I eine Werkstückzuführungseinheit 2 vorgesehen. Darüber hinaus kann die Werkstückzuführungsstation I auch zur Werkstückabführung verwendet werden, d.h. zum Abtransport der bereits bearbeiteten Werkstücke. Zudem kann die Werkstückzuführungsstation I zum Wenden des Werkstücks verwendet werden, so dass beispielsweise nach einem oberseitigen Bearbeitungsschritt anschließend eine unterseitige Bearbeitung des Werkstücks erfolgen kann.

Die Messstation II weist einen Sensor 3 auf, mittels dem das zu bearbeitende Werkstück vor dessen Bearbeitung vermessen wird. Der Sensor 3 kann beispielsweise eine Kamera oder aber ein Topografiesensor sein. Mittels des Sensors 3 kann insbesondere die örtliche Lage des Werkstücks im Raum, dessen Kontur, dessen Höhenprofil und/oder eine bestimmte Erkennungsmarke erfasst werden. Basierend auf diesen Daten kann anschließend die Bearbeitung des Werkstücks an der Bearbeitungsstation III erfolgen. Insbesondere bei der hochgenauen Bearbeitung von Werkstücken im Mikrometerbereich bzw. Submikrometerbereich ist eine derartige Vermessung des Werkstücks vor dessen Bearbeitung nötig.

Die Bearbeitungsstation III weist ein Laserbearbeitungswerkzeug 4 auf, mittels der ein gebündelter Laserstrahl bereitgestellt wird. Das Laserbearbeitungswerkzeug 4 ist insbesondere zur Bereitstellung eines gepulsten Laserstrahls mit einer Pulsdauer kleiner als 100ns (Kurzpulslaser), insbesondere kleiner als 1ps (Ultrakurzpulslaser) ausgebildet. Das Laserbearbeitungswerkzeug 4 kann insbesondere derart ausgebildet sein, dass Material des Werkstücks durch Sublimation direkt vom festen in den gasförmigen Aggregatszustand übergeht und dabei verdampft. Dadurch kann eine hochgenaue Materialbearbeitung bewirkt werden. An der Bearbeitungsstation III kann ferner ein Sensor vorgesehen sein, mittels dem Merkmale am Werkstück bzw. an einer Werkstückaufnahme 6.1, 7.1 einer Transporteinheit 6, 7 erfassbar sind. Dieser Sensor kann beispielsweise zur Bestimmung der Lage des Werkstücks zur Steuerung einer Dreh- oder Schwenkbewegung der Werkstückaufnahme 6.1, 7.1 verwendet werden.

Wie in den Figuren 1 bis 3 ersichtlich, sind die Werkstoffzuführungsstation I, die Messstation II und die Bearbeitungsstation III in einer gemeinsamen, vertikal verlaufenden Maschinenebene ME vorgesehen, die durch die x-Achse und die z-Achse aufgespannt wird. Die Werkstückzuführungsstation I, die Messstation II und die Bearbeitungsstation III sind dabei in x-Richtung beabstandet zueinander angeordnet.

Zum Transport der zu bearbeitenden Werkstücke von der Werkstückzuführungsstation I zu den weiteren Stationen und zurück zur Werkstückzuführungsstation I (zur Abführung bzw. zum Wenden des Werkstücks) ist eine Transporteinrichtung 5 vorgesehen. Die Transporteinrichtung 5 weist zumindest zwei, im gezeigten Ausführungsbeispiel genau zwei Transporteinheiten 6, 7 auf, die jeweils eine Werkstückaufnahme 6.1, 7.1 umfassen. Die Werkstückaufnahme 6.1, 7.1 ist zur eingespannten Halterung eines von der Werkstückzuführungsstation I zugeführten Werkstücks ausgebildet. Dabei wird das Werkstück nach der Übergabe von der Werkstückzuführungsstation I durch die Werkstückaufnahme 6.1, 7.1 klemmend gehalten und diese klemmende Halterung wird zumindest während der Vermessung des Werkstücks an der Messstation II und der Bearbeitung desselben an der Bearbeitungsstation III beibehalten, um eine ungewollte Veränderung der Lage des Werkstücks im Raum, insbesondere im Zeitraum zwischen der Vermessung des Werkstücks und dessen Bearbeitung zu vermeiden. Vorzugsweise wird die klemmende Halterung erst an der Werkstückzuführungsstation I wieder gelöst, um das bearbeitete Werkstück zu entnehmen oder zu wenden.

Die Transporteinrichtung 5 weist eine Führungsschienenanordnung 8 auf, mittels der eine Bewegbarkeit der Transporteinheiten 6, 7 in y-Richtung, d.h. eine Bewegung quer, insbesondere senkrecht zur Maschinenebene ME ermöglicht wird. Die Führungsschienenanordnung 8 kann beispielsweise mehrere Führungsschienen 8.1 aufweisen, die parallel und beabstandet zueinander auf einem Maschinenbett 10 vorgesehen sind.

Auf dieser Führungsschienenanordnung 8 sind Verfahrschienen 9a, 9b vorgesehen. Die Führungsschienenanordnung 8 wirkt mit den Verfahrschienen 9a, 9b derart zusammen, dass diese in y-Richtung verschiebbar sind. Auf den Verfahrschienen 9a, 9b selbst ist jeweils eine Transporteinheit 6, 7 vorgesehen, und zwar an einer ersten Verfahrschiene 9a die erste Transporteinheit 6 und an einer zweiten Verfahrschiene 9b die zweite Transporteinheit 7. Die Verfahrschienen 9a, 9b sind unabhängig voneinander auf der Führungsschienenanordnung 8 verfahrbar. Zum Antrieb der Verfahrschienen 9a, 9b kann insbesondere ein Linearantrieb verwendet werden.

Die Transporteinheiten 6, 7 wiederum sind unabhängig voneinander auf der jeweiligen Verfahrschiene 9a, 9b verschiebbar geführt, und zwar entlang der Längsachse der Verfahrschienen 9a, 9b, d.h. im gezeigten Ausführungsbeispiel in x-Richtung. Damit können durch das Verschieben der Verfahrschienen 9a, 9b an der Führungsschienenanordnung 8 und das Verfahren der Transporteinheiten 6, 7 auf bzw. an den Verfahrschienen 9a, 9b die Transporteinheiten 6, 7 in einer horizontal ausgerichteten Ebene (x-y-Ebene) verfahren werden.

Wie zuvor beschrieben liegen zumindest die Messebene, in der die Vermessung des Werkstücks an der Messstation II erfolgt, und die Bearbeitungsebene, in der die Bearbeitung des Werkstücks an der Bearbeitungsstation III erfolgt, in einer gemeinsamen Maschinenebene ME. Damit wäre es grundsätzlich möglich, dass ein an einer Transporteinheit 6, 7 gehaltenes Werkstück nach der Vermessung desselben an der Messstation II durch bloße Verschiebung in x-Richtung an die Bearbeitungsstation III transportiert und dort ohne Verschiebung in y-Richtung bearbeitet wird. Im gezeigten Ausführungsbeispiel wird zumindest eine, vorzugsweise beide Transporteinheiten 6, 7 zudem auch in y-Richtung verfahren, um ein Vorbeibewegen der Transporteinheiten 6, 7 aneinander zu ermöglichen.

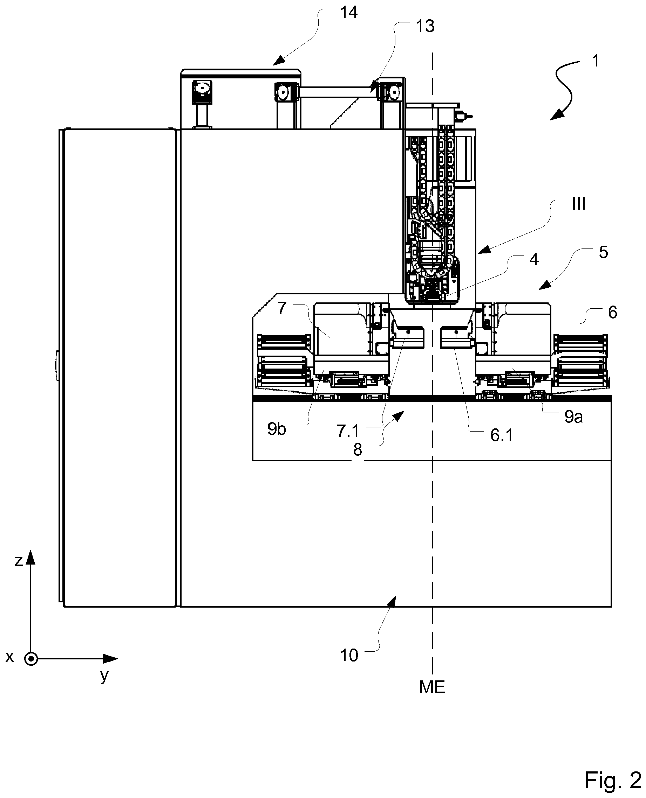

Wie insbesondere in Fig. 2 zu erkennen ist, sind die Transporteinheiten 6, 7 mit ihren Werkstückaufnahmen 6.1, 7.1 einander gegenüberliegend angeordnet, d.h. die Werkstückaufnahme 6.1 der ersten Transporteinheit 6 steht in Richtung der Maschinenrückseite (positive y-Richtung) und die Werkstückaufnahme 7.1 der zweiten Transporteinheit 7 steht in Richtung der Maschinenvorderseite (negative y-Richtung) ab. In einem Maschinenzustand, bei dem sich die erste Transporteinheit 6 beispielsweise an der Messstation II befindet, um das daran gehaltene Werkstück zu vermessen und sich die zweite Transporteinheit 7 beispielsweise an der Bearbeitungsstation III befindet, um das daran gehaltene Werkstück zu bearbeiten, kommen zumindest Abschnitte der Transporteinheiten 6, 7, insbesondere deren Werkstückaufnahmen 6.1, 7.1 in der gemeinsamen Maschinenebene ME zu liegen. In anderen Worten überlappen sich damit zumindest Teilabschnitte der Transporteinheiten 6, 7, so dass ein Verfahren der ersten Transporteinheit 6 von der Messstation II an die Bearbeitungsstation III und ein gleichzeitiges Verfahren der zweiten Transporteinheit 7 von der Bearbeitungsstation III in Richtung der Werkstückzuführungsstation I kollisionsfrei nicht möglich ist, ohne die Transporteinheiten 6, 7 relativ zueinander in y- Richtung zu verfahren.

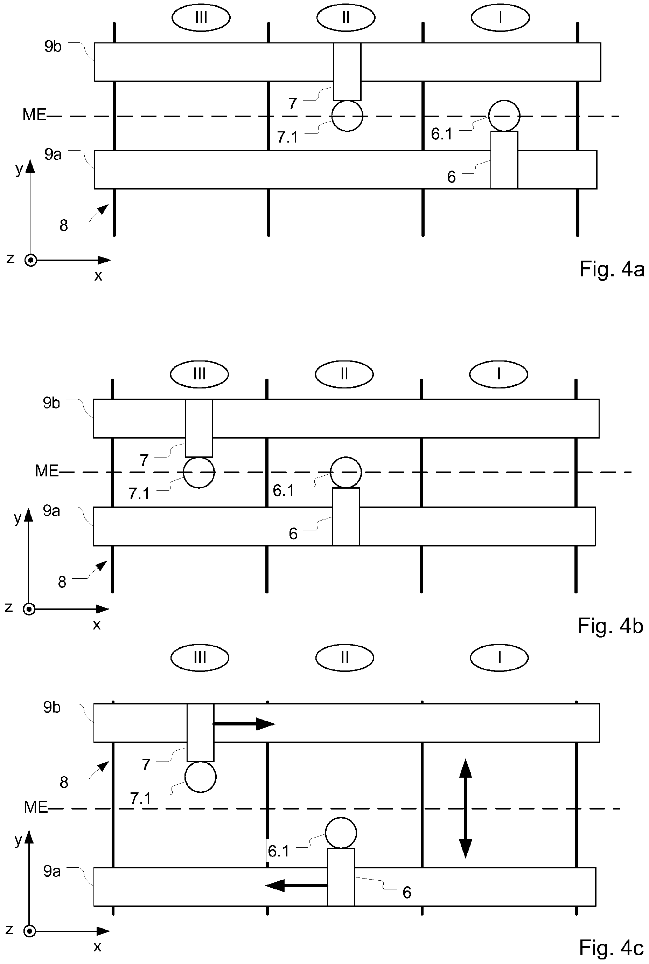

Nachfolgend wird beispielhaft ein Bewegungszyklus der Transporteinrichtung 5 basierend auf den schematischen Figuren 4a bis 4e näher beschrieben. Diese zeigen lediglich die wesentlichen Bestandteile der Transporteinrichtung 5 entlang der einzelnen Stationen I bis III, nämlich die Führungsschienenanordnung 8, die Verfahrschienen 9a, 9b und die Transporteinheiten 6, 7.

In Fig. 4a befindet sich die erste Transporteinheit 6 an der Werkstückzuführungsstation I, um dieser ein zu bearbeitendes Werkstück zuzuführen. Die zweite Transporteinheit 7 befindet sich an der Messstation II, um ein an ihr gehaltenes Werkstück zu vermessen. Die Verfahrschienen 9a, 9b sind derart in y- Richtung positioniert, dass die Werkstückaufnahmen 6.1, 7.1 in y- Richtung gesehen auf gleicher Höhe angeordnet sind.

Nach der Zuführung des Werkstücks an die erste Transporteinheit 6 stellt sich diese beispielsweise zur Vermessung an der Messstation II an und wartet, bis die zweite Transporteinheit 7 von der Messstation II zur Bearbeitungsstation III verfahren wird. Nachdem die zweite Transporteinheit 7 aus der Messstation II herausgefahren wurde, wird die erste Transporteinheit 6 an die Messstation II verfahren, um das zuvor zugeführte Werkstück zu vermessen (Fig. 4b).

Wie in Fig. 4c gezeigt, werden anschließend die Verfahrschienen 9a, 9b relativ zueinander in y-Richtung auseinanderverfahren (angedeutet durch Doppelpfeil), so dass der Abstand der Verfahrschienen 9a, 9b vergrößert wird. Dies kann dadurch erfolgen, dass lediglich eine der beiden Verfahrschienen 9a, 9b oder aber beide verfahren werden. Nach dem Auseinanderfahren werden die Transporteinheiten 6, 7 in entgegengesetzte Richtungen (angedeutet durch in x- Richtung verlaufenden Pfeile) verfahren und dabei aneinander vorbeibewegt.

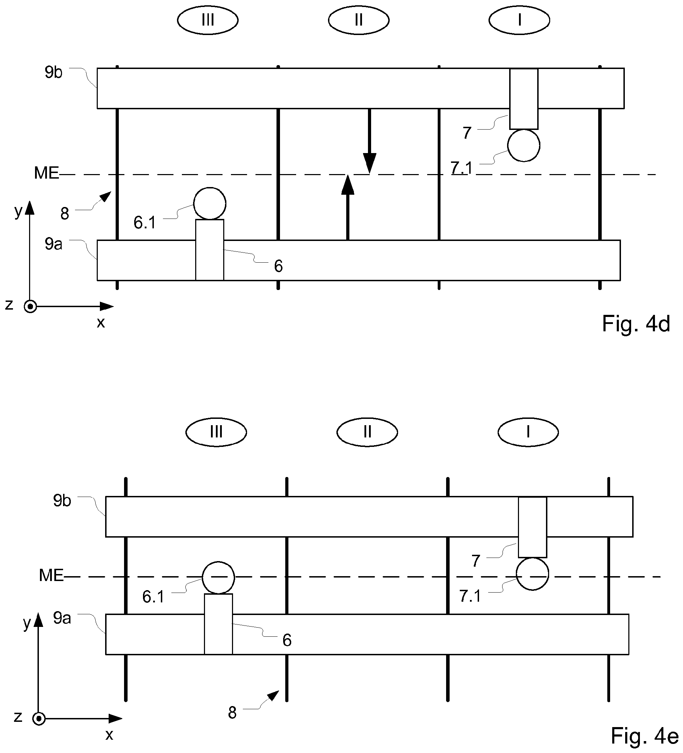

Nach dem aneinander Vorbeibewegen der Transporteinheiten 6, 7 wird der Abstand zwischen den Verfahrschienen 9a, 9b wieder verringert, d.h. die Verfahrschienen 9a, 9b werden aufeinander zu bewegt, wie dies durch die entgegengesetzt verlaufenden Pfeile in Fig. 4d angedeutet ist. Dabei können lediglich eine der beiden Verfahrschienen 9a, 9b oder aber beide verfahren werden.

Fig. 4e zeigt die Position der Verfahrschienen 9a, 9b in ihrer Ausgangsposition, so dass die Bearbeitung des an der Transporteinheit 6 gehaltenen Werkstücks an der Bearbeitungsstation III und die Entnahme bzw. das Wenden des an der Transporteinheit 7 gehaltenen Werkstücks an der Werkstückzuführungsstation I erfolgen kann.

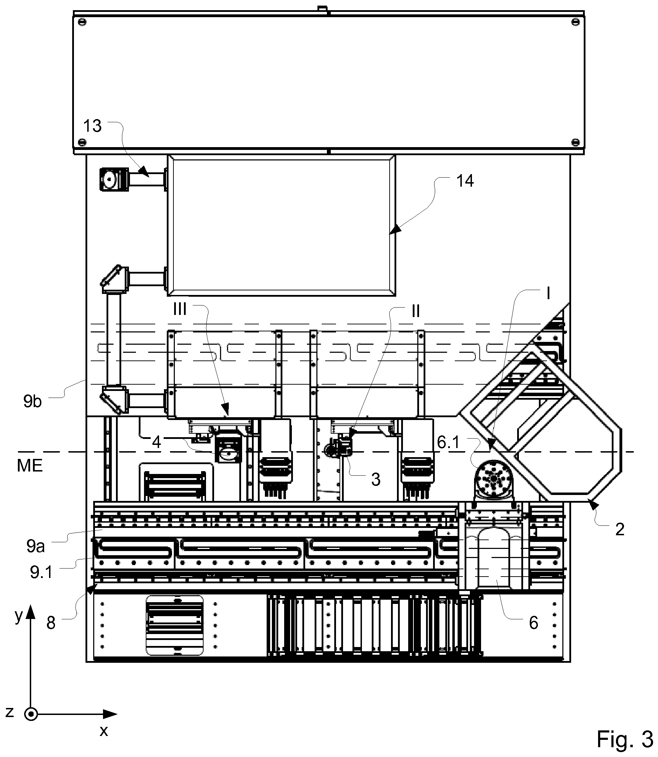

Um eine hohe Verfahrgenauigkeit der Transporteinrichtung 5 und eine hochgenaue Reproduzierbarkeit der Bewegungsabläufe zu erreichen, ist die Transporteinrichtung 5 zumindest teilweise temperaturstabilisiert ausgebildet. Insbesondere kann die Temperaturstabilisierung durch eine Fluidkühlung, insbesondere eine Wasserkühlung erreicht werden. Wie insbesondere in Fig. 3 ersichtlich, können die Verfahrschienen 9a, 9b schlangenförmig verlegte Leitungen 9.1 aufweisen, in denen das die Temperaturstabilisierung bewirkende Fluid geführt ist. Weiterhin können auch die Führungschienenanordnung 8, die Antriebe der Verfahrschienen 9a, 9b bzw. der Transporteinheiten 6, 7 und/oder die Lagerelemente dieser Einheiten temperaturstabilisiert sein. Dadurch können durch thermische Ausdehnung resultierende Fehler bzw. Abweichungen wesentlich reduziert bzw. vermieden werden. Zudem kann das Maschinenbett 10 zumindest teilweise aus einem Material hoher Masse, beispielsweise aus Stein, insbesondere Granit gefertigt sein, um die Bearbeitungsgenauigkeit der Laserbearbeitungsmaschine 1 zu erhöhen.

Die Werkstückaufnahmen 6.1, 7.1 können neben ihrer translatorischen Bewegbarkeit in x-y-Richtung zudem rotativ verstellbar sein. Insbesondere können die Werkstückaufnahmen 6.1, 7.1 jeweils um zwei voneinander unabhängige Raumachsen rotiert werden, und zwar insbesondere eine erste, in y-Richtung verlaufende Raumachse und eine quer, insbesondere senkrecht zur ersten Raumachse verlaufende zweite Raumachse (verlaufend in einer x-z-Ebene). Dadurch kann das Werkstück an der jeweiligen Station in geeigneter Weise gedreht bzw. geschwenkt werden, um beispielsweise eine schräge Bohrung in das Werkstück einbringen zu können.

Die an den einzelnen Stationen I bis III vorgesehenen Einheiten, beispielsweise die an der Werkstückzuführungsstation I vorgesehene Werkstück-Wechseleinheit 11, oder Teile davon, der Sensor 3 an der Messstation II und das Laserbearbeitungswerkzeug 4 an der Bearbeitungsstation III können in z-Richtung verfahrbar sein, um die jeweiligen Einheiten in der erforderlichen Höhe für den durch sie durchgeführten Bearbeitungsschritt positionieren zu können.

Die am Laserbearbeitungswerkzeug 4 bereitgestellte Laserstrahlung wird durch eine Lasereinheit 12 bereitgestellt. Diese Lasereinheit 12 ist beispielsweise im Maschienbett 10 der Laserbearbeitungsmaschine 1 vorgesehen bzw. dort integriert. Die Lasereinheit 12 kann ein Kurzpulslaser (Pulsdauer kleiner 100ns) oder ein Ultrakurzpulslaser (Pulsdauer kleiner 1ps) sein. Mittels einer derartigen Lasereinheit 12 kann eine hochgenaue Bearbeitung des Werkstücks erfolgen, insbesondere durch Sublimation des zu entfernenden Materials. Diese Sublimation kann beispielsweise unter Einwirkung eines Prozessgases beispielsweise Argon oder Stickstoff erfolgen, mittels dem das verdampfte Material ausgetrieben wird.

Die von der Lasereinheit 12 bereitgestellte Laserstrahlung wird durch eine geeignete Strahlführung 13 dem Laserbearbeitungswerkzeug 4 zugeführt. In der Strahlführung 13 kann eine Optik 14 zum Versetzen der Laserstrahlung in eine Taumelbewegung vorgesehen sein. Diese Optik kann beispielsweise durch ein Zylinderlinsenteleskop, eine Keilplattenoptik, oder eine mehrere Spiegel aufweisende Scanneroptik gebildet werden. Durch die Taumelbewegung des Laserstrahls ist es möglich, Bohrungen bzw. Ausnehmungen im Werkstück zu erzeugen, die eine positiv oder negativ konische Form (Konus öffnet sich entgegen der Laserstrahlrichtung oder in Laserstrahlrichtung) aufweisen.

Vorzugsweise wird durch die Lasereinheit 12 eine zirkular polarisierte Laserstrahlung bereitgestellt. Durch die zirkulare Polarisation wird erreicht, dass die Materialbearbeitung mittels des Laserstrahls keine Vorzugsrichtung aufweist, in der ein schnellerer Materialabtrag erfolgt als in einer anderen Raumrichtung. Damit wird ein gleicher oder im Wesentlichen gleicher Materialabtrag pro Zeiteinheit in x- und y-Richtung erreicht.

Die Erfindung wurde voranstehend an Ausführungsbeispielen beschrieben. Es versteht sich, dass zahlreiche Änderungen sowie Abwandlungen möglich sind, ohne dass dadurch der der Erfindung zugrunde liegend Erfindungsgedanke verlassen wird. So kann die Laserbearbeitungsmaschine 1 abweichend von der vorherigen Beschreibung von Ausführungsbeispielen lediglich aus zwei Stationen bestehen, wobei die erste Station eine Bearbeitungsstation mit einem Laserbearbeitungswerkzeug ist und die zweite Station als Messstation und/oder als weitere Bearbeitungsstation ausgebildet ist. Die Zuführung der Bauteile kann dann beispielsweise an der zweiten Station erfolgen. Die Transporteinrichtung ist zum Verfahren von Transporteinheiten zwischen diesen Stationen ausgebildet.

### Bezugszeichenliste

- 1: Laserbearbeitungsmaschine
- 2: Werkstückzuführungseinheit
- 3: Sensor
- 4: Laserbearbeitungswerkzeug
- 5: Transporteinrichtung
- 6: erste Transporteinheit
- 6.1: Werkstückaufnahme
- 7: zweite Transporteinheit
- 7.1: Werkstückaufnahme
- 8: Führungsschienenanordnung
- 8.1: Führungsschiene
- 9a: erste Verfahrschiene
- 9b: zweite Verfahrschiene
- 9.1: Leitung
- 10: Maschinenbett
- 11: Werkstückwechseleinheit
- 12: Lasereinheit
- 13: Strahlführung
- 14: Optik

- ME: Maschinenebene
- x: x-Richtung
- y: y-Richtung
- z: z-Richtung
- I: dritte Station
- II: zweite Station
- III: erste Station

## Patentansprüche

1. Laserbearbeitungsmaschine zum Abtragen von Material von einem Werkstück umfassend zumindest eine erste Station (III), an der ein Laserbearbeitungswerkzeug (4) vorgesehen ist und an der eine Bearbeitung des Werkstücks mittels des Laserbearbeitungswerkzeugs (4) erfolgt, zumindest eine zweite Station (II), an der eine Vermessung und/oder Bearbeitung des Werkstücks erfolgt und einer Transporteinrichtung (5) mit zumindest zwei Transporteinheiten (6, 7) zum Bewegen des Werkstücks zwischen der ersten Station (III) und der zweiten Station (II), wobei die Transporteinheiten (6, 7) jeweils eine Werkstückaufnahme (6.1, 7.1) aufweisen, die zum eingespannten Halten eines Werkstücks ausgebildet ist und die Transporteinheiten (6, 7) unabhängig voneinander in zwei unterschiedlichen Raumrichtungen (x, y) verfahrbar sind, und zwar derart, dass die Transporteinheiten (6, 7) in einer ersten Raumrichtung (x), entlang der die erste und zweite Station (III, II) angeordnet sind, aneinander vorbeibewegbar sind.

2. Laserbearbeitungsmaschine nach Anspruch 1, **dadurch gekennzeichnet, dass** die Transporteinrichtung (5) eine Führungsschienenanordnung (8) aufweist, die in einer zweiten Raumrichtung (y) verläuft und dass auf dieser Führungsschienenanordnung (8) zumindest zwei voneinander unabhängig bewegbare Verfahrschienen (9a, 9b) vorgesehen sind.

3. Laserbearbeitungsmaschine nach Anspruch 2, **dadurch gekennzeichnet, dass** auf jeder Verfahrschiene (9a, 9b) eine, insbesondere genau eine Transporteinheit (6, 7) geführt ist, die in der ersten, quer zur zweiten Raumrichtung (y) verlaufenden Raumrichtung (x) verfahrbar ist.

4. Laserbearbeitungsmaschine nach einem der vorhergehenden Ansprüche, **dadurch gekennzeichnet, dass** die Bewegung der Verfahrschienen (9a, 9b) auf der Führungsschienenanordnung (8) und/oder die Bewegung der Transporteinheit (6, 7) auf der jeweiligen Verfahrschiene (9a, 9b) mittels eines Linear-Direktantriebs erfolgt.

5. Laserbearbeitungsmaschine nach einem der vorhergehenden Ansprüche 2 bis 4, **dadurch gekennzeichnet, dass** die erste und zweite Station (III, II) in einer gemeinsamen, vertikal ausgerichteten Maschinenebene (ME) angeordnet sind und dass die Laserbearbeitungsmaschine (1) derart ausgebildet ist, dass zumindest eine Verfahrschiene (9a, 9b) zum aneinander Vorbeibewegen der Transporteinheiten (6, 7) entlang einer quer zur Maschinenebene (ME) verlaufenden zweiten Raumrichtung (y) bewegt wird.

6. Laserbearbeitungsmaschine nach Anspruch 5, **gekennzeichnet durch** deren Ausbildung derart, dass eine Verfahrschiene (9a, 9b) oder zumindest zwei Verfahrschienen (9a, 9b) entlang der zweiten Raumrichtung (y) bewegt werden.

7. Laserbearbeitungsmaschine nach Anspruch 5 oder 6, **gekennzeichnet durch** deren Ausbildung derart, dass die zumindest eine Verfahrschiene (9a, 9b) nach dem aneinander Vorbeibewegen der Transporteinheiten (6, 7) entlang der zweiten Raumrichtung (y) zurückbewegt wird.

8. Laserbearbeitungsmaschine nach einem der vorhergehenden Ansprüche 2 bis 7, **dadurch gekennzeichnet, dass** die Führungsschienenanordnung (8) und/oder die Verfahrschienen (9a, 9b) temperaturstabilisiert ausgebildet sind.

9. Laserbearbeitungsmaschine nach einem der vorhergehenden Ansprüche, **dadurch gekennzeichnet, dass** die Antriebe für die Verstellung der Verfahrschienen (9a, 9b) und/oder die Antriebe für die Verstellung der Transporteinheiten (6, 7) temperaturstabilisiert ausgebildet sind.

10. Laserbearbeitungsmaschine nach einem der vorhergehenden Ansprüche, **dadurch gekennzeichnet, dass** die Transporteinheit (6, 7) jeweils eine Werkstückaufnahme (6.1, 7.1) aufweist, die um zumindest zwei zueinander orthogonale Raumachsen rotierbar und/oder schwenkbar ist.

11. Laserbearbeitungsmaschine nach der vorhergehenden Ansprüche 2 bis 9, **dadurch gekennzeichnet, dass** die Transporteinheiten (6, 7) jeweils eine Werkstückaufnahme (6.1, 7.1) aufweisen und dass die auf unterschiedlichen Verfahrschienen (9a, 9b) vorgesehenen Transporteinheiten (6, 7) derart angeordnet sind, dass die Werkstückaufnahmen (6.1, 7.1) zu unterschiedlichen Seiten von der jeweiligen Verfahrschiene (9a, 9b) abstehen.

12. Laserbearbeitungsmaschine nach einem der vorhergehenden Ansprüche, **dadurch gekennzeichnet, dass** die erste und zweite Station (III, II) derart angeordnet sind, dass eine Bearbeitung des Werkstücks nach einem Verfahren desselben in der ersten Raumrichtung (x) ohne Verfahren in einer quer zur ersten Raumrichtung (x) verlaufenden zweiten Raumrichtung (y) erfolgt.

13. Laserbearbeitungsmaschine nach einem der vorhergehenden Ansprüche, **gekennzeichnet durch** deren Ausbildung derart, dass beim aneinander Vorbeibewegen eine erste Transporteinheit (6) von der ersten Station (III) zur zweiten Station (II) und eine zweite Transporteinheit (7) in entgegengesetzter Richtung von der zweiten Station (II) zur ersten Station (III) verfahren wird.

14. Laserbearbeitungsmaschine nach einem der vorhergehenden Ansprüche, **dadurch gekennzeichnet, dass** die zweite Station (II) eine Messstation mit einem Sensor (3) zur Aufnahme von Werkstückinformationen ist und dass an der ersten Station (III) die Bearbeitung des Werkstücks basierend auf den Werkstückinformationen erfolgt.

15. Verfahren zum Betreiben einer Laserbearbeitungsmaschine (1) umfassend zumindest eine erste Station (III) mit einem Laserbearbeitungswerkzeug (4), eine zweite Station (II) und eine Transporteinrichtung (5) mit zumindest zwei Transporteinheiten (6, 7) zum Bewegen von Werkstücken zwischen der ersten und zweiten Station (III, II), wobei das Verfahren folgende Schritte aufweist:
- Durchführen eines Bearbeitungsschritts an einem an einer ersten Transporteinheit (6) gehaltenen Werkstück an der ersten Station (III);
- Durchführen eines Mess- und/oder Bearbeitungsschritts an einem an einer zweiten Transporteinheit (7) gehaltenen Werkstück an der zweiten Station (II);
- Vorbeibewegen der zweiten Transporteinheit (7) an der ersten Transporteinheit (6) derart, dass die Transporteinheiten (6, 7) in einer zweiten Raumrichtung (y) quer zu einer Maschinenebene (ME), in der die erste und zweite Station (III, II) angeordnet sind, auseinanderbewegt und parallel zu dieser Maschinenebene (ME) verfahren werden, um die erste Transporteinheit (6) an der zweiten Station (II) und/oder die zweite Transporteinheit (7) an der ersten Station (III) zu positionieren.

## Claims

1. A laser processing machine for removing material from a workpiece, comprising at least one first station (III) at which a laser processing tool (4) is provided and at which said workpiece is processed by means of said laser processing tool (4), at least one second station (II) at which said workpiece is measured and/or processed, and a transport means (5) having at least two transport units (6, 7) for moving said workpiece between said first station (III) and said second station (II), wherein said transport units (6, 7) each have a workpiece receptacle (6.1, 7.1) configured to hold a workpiece in a clamped manner and said transport units (6, 7) can be moved independently of one another in two different spatial directions (x, y) in such a way that said transport units (6, 7) can be moved past one another in a first spatial direction (x) along which said first and second stations (III, II) are arranged.

2. The laser processing machine according to claim 1, **characterized in that** said transport means (5) includes a guide rail arrangement (8) extending in a second spatial direction (y) and **in that** at least two travel rails (9a, 9b) being movable independently of each other are provided on this guide rail arrangement (8).

3. The laser processing machine according to claim 2, **characterized in that** a, in particular exactly one transport unit (6, 7), is guided on each travel rail (9a, 9b), said transport unit (6, 7) being movable in the first spatial direction (x) extending transversely to the second spatial direction (y).

4. The laser processing machine according to one of the preceding claims, **characterized in that** the movement of said travel rails (9a, 9b) on said guide rail arrangement (8) and/or the movement of said transport unit (6, 7) on the respective travel rail (9a, 9b) are performed by means of a linear direct drive.

5. The laser processing machine according to one of the preceding claims 2 to 4, **characterized in that** said first and second stations (III, II) are arranged in a common vertically oriented machine plane (ME) and that said laser processing machine (1) is configured such that at least one travel rail (9a, 9b) for moving said transport units (6, 7) past each other is moved along a second spatial direction (y) extending transversely to said machine plane (ME).

6. The laser processing machine according to claim 5, **characterized in that** said laser processing machine is configured such that a travel rail (9a, 9b) or at least two travel rails (9a, 9b) are moved along the second spatial direction (y).

7. The laser processing machine according to claim 5 or 6, **characterized in that** said laser processing machine is configured such that the at least one travel rail (9a, 9b) is moved back along said second spatial direction (y) after said transport units (6, 7) have moved past one another.

8. The laser processing machine according to one of the preceding claims 2 to 7, **characterized in that** said guide rail arrangement (8) and/or said travel rails (9a, 9b) are configured to be temperature-stabilized.

9. The laser processing machine according to one of the preceding claims, **characterized in that** the drives for adjusting said travel rails (9a, 9b) and/or the drives for adjusting said transport units (6, 7) are configured to be temperature-stabilized.

10. The laser processing machine according to one of the preceding claims, **characterized in that** said transport units (6, 7) each have a workpiece receptacle (6.1, 7.1) rotatable and/or pivotable about at least two mutually orthogonal spatial axes.

11. The laser processing machine according to one of the preceding claims 2 to 9, **characterized in that** said transport units (6, 7) each have a workpiece receptacle (6.1, 7.1) and that the transport units (6, 7) provided on different travel rails (9a, 9b) are arranged such that the workpiece receptacles (6.1, 7.1) protrude from the respective travel rail (9a, 9b) on different sides.

12. The laser processing machine according to one of the preceding claims, **characterized in that** said first and second stations (III, II) are arranged such that processing said workpiece after moving the same in the first spatial direction (x) is performed without movement in a second spatial direction (y) extending transversely to the first spatial direction (x).

13. The laser processing machine according to one of the preceding claims, **characterized in that** said laser processing machine is configured such that, when moving past each other, a first transport unit (6) is moved from said first station (III) to said second station (II) and a second transport unit (7) is moved in the opposite direction from said second station (II) to said first station (III).

14. The laser processing machine according to one of the preceding claims, **characterized in that** said second station (II) is a measuring station with a sensor (3) for receiving workpiece information and that said workpiece is processed at said first station (III) based on said workpiece information.

15. A method for operating a laser processing machine (1) comprising at least a first station (III) with a laser processing tool (4), a second station (II) and a transport means (5) with at least two transport units (6, 7) for moving workpieces between the first and the second station (III, II), said method comprising the following steps:
- performing a processing step on a workpiece held on a first transport unit (6) at said first station (III);
- performing a measuring and/or processing step on a workpiece held on a second transport unit (7) at said second station (II);
- moving said second transport unit (7) past said first transport unit (6) such that said transport units (6, 7) are moved apart in a second spatial direction (y) transverse to a machine plane (ME) in which said first and second stations (III, II) are arranged and are moved in parallel to said machine plane (ME) in order to position said first transport unit (6) at said second station (II) and/or said second transport unit (7) at said first station (III).

## Revendications

1. Machine d'usinage au laser pour enlever de la matière d'une pièce à usiner, comprenant au moins une première station (III) dans laquelle est prévu un outil d'usinage au laser (4) et dans laquelle l'usinage de la pièce à usiner est effectué au moyen de l'outil d'usinage au laser (4), au moins une deuxième station (II) dans laquelle s'effectue(nt) une mesure et/ou un usinage de la pièce à usiner, et un dispositif de transport (5) pourvu d'au moins deux unités de transport (6, 7) pour déplacer la pièce à usiner entre la première station (III) et la deuxième station (II), les unités de transport (6, 7) présentant chacune un porte-pièce (6.1, 7.1) qui est conçu pour maintenir une pièce de manière serrée, et les unités de transport (6, 7) pouvant être déplacées indépendamment l'une de l'autre dans deux directions spatiales différentes (x, y), de telle sorte que les unités de transport (6, 7) peuvent passer l'une devant l'autre dans une première direction spatiale (x) le long de laquelle les première et deuxième stations (III, II) sont disposées.

2. Machine d'usinage au laser selon la revendication 1,
**caractérisée en ce que**
le dispositif de transport (5) comporte un ensemble de rails de guidage (8) qui s'étend dans une deuxième direction spatiale (y), et **en ce que** au moins deux rails de déplacement (9a, 9b) mobiles indépendamment l'un de l'autre sont prévus sur ledit ensemble de rails de guidage (8).

3. Machine d'usinage au laser selon la revendication 2,
**caractérisée en ce que**
une unité de transport (6, 7), en particulier exactement une, est guidée sur chaque rail de déplacement (9a, 9b) et est mobile dans la première direction spatiale (x) s'étendant transversalement à la deuxième direction spatiale (y).

4. Machine d'usinage au laser selon l'une des revendications précédentes,
**caractérisée en ce que**
le mouvement des rails de déplacement (9a, 9b) sur l'ensemble de rails de guidage (8) et/ou le mouvement de l'unité de transport (6, 7) sur le rail de déplacement respectif (9a, 9b) s'effectue(nt) au moyen d'un entraînement direct linéaire.

5. Machine d'usinage au laser selon l'une des revendications 2 à 4,
**caractérisée en ce que**
la première et la deuxième station (III, II) sont disposées dans un plan de machine commun (ME), aligné verticalement, et **en ce que** la machine d'usinage au laser (1) est conçue de manière à ce qu'au moins un rail de déplacement (9a, 9b) soit déplacé le long d'une deuxième direction spatiale (y) s'étendant transversalement au plan de machine (ME) pour faire passer les unités de transport (6, 7) l'une devant l'autre.

6. Machine d'usinage au laser selon la revendication 5,
**caractérisée par** sa réalisation telle qu'un rail de déplacement (9a, 9b) ou au moins deux rails de déplacement (9a, 9b) sont déplacés le long de la deuxième direction spatiale (y).

7. Machine d'usinage au laser selon la revendication 5 ou 6,
**caractérisée par** sa réalisation telle que, une fois que les unités de transport (6, 7) sont passées l'une devant l'autre, ledit au moins un rail de déplacement (9a, 9b) est déplacé en retour le long de la deuxième direction spatiale (y).

8. Machine d'usinage au laser selon l'une des revendications précédentes 2 à 7,
**caractérisée en ce que**
l'ensemble de rails de guidage (8) et/ou les rails de déplacement (9a, 9b) sont conçus de manière stabilisée en température.

9. Machine d'usinage au laser selon l'une des revendications précédentes,
**caractérisée en ce que**
les entraînements pour le réglage des rails de déplacement (9a, 9b) et/ou les entraînements pour le réglage des unités de transport (6, 7) sont conçus de manière stabilisée en température.

10. Machine d'usinage au laser selon l'une des revendications précédentes,
**caractérisée en ce que**
chaque unité de transport (6, 7) présente un porte-pièce (6.1, 7.1,) qui peut être tourné et/ou pivoté autour d'au moins deux axes orthogonaux l'un à l'autre.

11. Machine d'usinage au laser selon l'une des revendications précédentes 2 à 9,
**caractérisée en ce que**
les unités de transport (6, 7) présentent chacune un porte-pièce (6.1, 7.1), et **en ce que**
les unités de transport (6, 7) prévues sur différents rails de déplacement (9a, 9b) sont disposées de telle sorte que les porte-pièces (6.1, 7.1) font saillie du rail de déplacement respectif (9a, 9b) vers des côtés différents.

12. Machine d'usinage au laser selon l'une des revendications précédentes,
**caractérisée en ce que**
la première et la deuxième station (III, II) sont disposées de telle sorte qu'un usinage de la pièce à usiner après son déplacement dans la première direction spatiale (x) s'effectue sans déplacement dans une deuxième direction spatiale (y) s'étendant transversalement à la première direction spatiale (x).

13. Machine d'usinage au laser selon l'une des revendications précédentes,
**caractérisée par** sa réalisation telle que
lors d'un passage l'une devant l'autre, une première unité de transport (6) est déplacée depuis la première station (III) jusqu'à la deuxième station (II), et une deuxième unité de transport (7) est déplacée dans la direction opposée depuis la deuxième station (II) jusqu'à la première station (III).

14. Machine d'usinage au laser selon l'une des revendications précédentes,
**caractérisée en ce que**
la deuxième station (II) est une station de mesure comportant un capteur (3) pour l'enregistrement des informations sur la pièce, et **en ce que** au niveau de la première station (III), la pièce est usinée sur la base des informations sur la pièce.

15. Procédé pour faire fonctionner une machine d'usinage au laser (1), comportant au moins une première station (III) pourvue d'un outil d'usinage au laser (4), une deuxième station (II) et un dispositif de transport (5) pourvu d'au moins deux unités de transport (6, 7) pour déplacer des pièces à usiner entre les première et deuxième stations (III, II), le procédé comprenant les étapes suivantes consistant à :
- mettre en œuvre une étape d'usinage sur une pièce à usiner, maintenue sur une première unité de transport (6), dans la première station (III) ;
- mettre en œuvre une étape de mesure et/ou d'usinage sur une pièce, maintenue sur une deuxième unité de transport (7), dans la deuxième station (II);
- faire passer la deuxième unité de transport (7) devant la première unité de transport (6), de telle sorte que les unités de transport (6, 7) sont déplacées en éloignement l'une de l'autre dans une deuxième direction spatiale (y) transversale à un plan de machine (ME) dans lequel sont disposées les première et deuxième stations (III, II), et sont déplacées parallèlement audit plan de machine (ME), afin de positionner la première unité de transport (6) dans la deuxième station (II) et/ou de positionner la deuxième unité de transport (7) dans la première station (III).
